# EUROPEAN PATENT APPLICATION

(11) **EP 4 517 929 A1**
(43) Date of publication of application: **05.03.2025**
(21) Application number: 23795650.3
(22) Date of filing: 28.04.2023
(51) Int. Cl.: H01M 10/613, H01M 10/6568, H01M 10/617, H01M 10/625, H01M 10/6556, H01M 10/6554

(54) **HEAT RADIATOR ASSEMBLY, BATTERY PACK, AND VEHICLE**

(30) Priority: 29.04.2022 CN 202221059926 U
(71) Applicant: BYD Company Limited, Shenzhen, Guangdong 518118 (CN)
(72) Inventor: XIAO, Xiaolin, Shenzhen, Guangdong 518118 (CN); ZHONG, Rijun, Shenzhen, Guangdong 518118 (CN); CAI, Yaomin, Shenzhen, Guangdong 518118 (CN); PENG, Qingbo, Shenzhen, Guangdong 518118 (CN)
(74) Representative: Mathys & Squire
(86) International application number: PCT/CN2023/091764
(87) International publication number: WO 2023/208218

(57) **Abstract**

A vehicle is provided with a battery pack. The battery pack comprises a heat radiator assembly. The heat radiator assembly comprises a first heat radiator, a second heat radiator, a third heat radiator, and at least one fourth heat radiator. The third heat radiator is connected between the first heat radiator and the second heat radiator. The third heat radiator is separately communicated with the first heat radiator and the second heat radiator; the at least one fourth heat radiator is connected between the first heat radiator and the second heat radiator, and the fourth heat radiator is separately communicated with the first heat radiator and the second heat radiator; the at least one fourth heat radiator and the third heat radiator are arranged side by side between the first heat radiator and the second heat radiator; the first heat radiator and the second heat radiator are both stamping plate type heat radiators; and the fourth heat radiator is a harmonica-shaped tube heat radiator.

## Description

### CROSS-REFERENCE TO RELATED APPLICATIONS

The present disclosure claims priority to and benefits of Chinese Patent Application No. 202221059926.4 filed by the BYD Co., Ltd. on April 29, 2022 and entitled "HEAT RADIATOR ASSEMBLY, BATTERY PACK, AND VEHICLE". The entire content of the above-referenced application is incorporated herein by reference.

### FIELD

The present disclosure relates to the technical field of batteries, and specifically, to a heat radiator assembly, a battery pack, and a vehicle.

### BACKGROUND

In the related art, some batteries dissipate heat through heat radiators made of stamped brazed plates. The heat radiator made of stamped brazed plates not only has a relatively large overall weight and high costs, which is not conducive to the improvement of the energy density of the whole pack, but also has a complex internal flow channel design and relatively long flow channels, resulting in a relatively large loss. Consequently, a relatively large temperature difference will be caused between various parts of the battery, which is not conducive to the balanced cooling of the battery.

### SUMMARY

The present disclosure is intended to resolve at least one of the technical problems existing in the related art. In view of this, the present disclosure provides a heat radiator assembly. The heat radiator assembly has good heat dissipation performance and a light weight.

The present disclosure further provides a battery pack.

The present disclosure further provides a vehicle.

The heat radiator assembly according to the present disclosure includes: a first heat radiator; a second heat radiator, the second heat radiator and the first heat radiator being oppositely arranged; a third heat radiator, the third heat radiator being connected between the first heat radiator and the second heat radiator, the third heat radiator being separately in communication with the first heat radiator and the second heat radiator, the third heat radiator being arranged with a joint, and a main heat dissipation region being formed among the third heat radiator, the second heat radiator, and the first heat radiator; and at least one fourth heat radiator, the at least one fourth heat radiator being located in the main heat dissipation region, the at least one fourth heat radiator being connected between the first heat radiator and the second heat radiator, and the fourth heat radiator being separately in communication with the first heat radiator and the second heat radiator, the at least one fourth heat radiator and the third heat radiator being arranged side by side between the first heat radiator and the second heat radiator, the first heat radiator and the second heat radiator being both stamping plate type heat radiators, and the fourth heat radiator being a harmonica-shaped tube heat radiator.

Therefore, by arranging the at least one fourth heat radiator between the first heat radiator and the second heat radiator, and configuring both the first heat radiator and the second heat radiator as stamping plate type heat radiators, and the fourth heat radiator as a harmonica-shaped tube heat radiator, only a part of the structure in the heat radiator assembly is stamping plate type heat radiators, so that the weight of the heat radiator assembly can be reduced compared with a heat radiator assembly in the related art of which the entire structure is all stamping plate type heat radiators. In addition, the flow channel design inside the harmonica-shaped tube heat radiator is relatively simple, which helps to optimize the heat dissipation performance of the heat radiator assembly.

In an embodiment, at least one fixing groove which is open is arranged on a side of each of the first heat radiator and the second heat radiator facing the fourth heat radiator, and an end portion of the fourth heat radiator is fixed in the corresponding fixing groove.

In an embodiment, the first heat radiator and the second heat radiator each include a first upper plate and a first lower plate. The first lower plate is fixed below the first upper plate. Flow channels and the fixing groove are formed by stamping in the first lower plate. The fixing groove is in communication with the flow channel, and the flow channel is in communication with the fourth heat radiator through the fixing groove.

In an embodiment, a width of the fixing groove is the same as a width of the corresponding fourth heat radiator, and the end portion of the fourth heat radiator is welded in the corresponding fixing groove.

In an embodiment, a depth of the fixing groove is equal to a height of the corresponding fourth heat radiator.

In an embodiment, first mating surfaces are arranged on two sides of the end portion of the fourth heat radiator, second mating surfaces are arranged on two sides of the fixing groove corresponding to the fourth heat radiator, and the first mating surfaces match the second mating surfaces.

In an embodiment, each of the first mating surfaces and the second mating surfaces is one of a curved surface, an arc surface, or an inclined flat surface.

In an embodiment, multiple fourth heat radiators are arranged, and the multiple fourth heat radiators are spaced apart in the main heat dissipation region.

In an embodiment, a first main flow channel and a second main flow channel are arranged in the first heat radiator, and the first main flow channel and the second main flow channel are spaced apart in a length direction of the first heat radiator; a third main flow channel and a fourth main flow channel are arranged in the second heat radiator, and the third main flow channel and the fourth main flow channel are spaced apart in a width direction of the second heat radiator; and the multiple fourth heat radiators include a first part, a second part, and a third part, the first main flow channel is in communication with the third main flow channel through the first part in the multiple fourth heat radiators, the first main flow channel is in communication with the fourth main flow channel through the second part in the multiple fourth heat radiators, and the fourth main flow channel is in communication with the second main flow channel through the third part in the multiple fourth heat radiators.

In an embodiment, at least two first branch flow channels are arranged in the first heat radiator, the at least two first branch flow channels include a first sub-flow channel and a second sub-flow channel, the first main flow channel is in communication with the first part in the multiple fourth heat radiators through the first sub-flow channel, and the first main flow channel is in communication with the second part in the multiple fourth heat radiators through the second sub-flow channel; and/or at least two second branch flow channels are arranged in the first heat radiator, the third part in the multiple fourth heat radiators is in communication with the second main flow channel through one part of the at least two second branch flow channels, and the second main flow channel is in communication with the third heat radiator through another part of the at least two second branch flow channels.

In an embodiment, at least two fourth branch flow channels are arranged in the second heat radiator, the at least two fourth branch flow channels include a first channel and a second channel, the second part in the multiple fourth heat radiators is in communication with the fourth main flow channel through the first channel, and the fourth main flow channel is in communication with the third part in the multiple fourth heat radiators through the second channel; and/or at least two third branch flow channels are arranged in the second heat radiator, the first part in the multiple fourth heat radiators is in communication with the third main flow channel through one part of the at least two third branch flow channels, and the third main flow channel is in communication with the third heat radiator through another part of the at least two third branch flow channels.

In an embodiment, a fifth main flow channel and a sixth main flow channel are arranged in the third heat radiator, and the fifth main flow channel and the sixth main flow channel are spaced apart in a length direction of the third heat radiator. The fifth main flow channel is in communication with the second main flow channel, and the sixth main flow channel is in communication with the third main flow channel.

In an embodiment, separation portions are arranged on outer sides of two ends of the fourth main flow channel. The separation portion on the outer side of one end of the fourth main flow channel separates the one part of the third branch flow channels from the first channel, and the separation portion on the outer side of the other end of the fourth main flow channel separates the another part of the third branch flow channels from the second channel.

In an embodiment, the joint is arranged with an inlet interface and an outlet interface. The fifth main flow channel is in communication with the outlet interface, and the sixth main flow channel is in communication with the inlet interface.

In an embodiment, the third heat radiator is a stamping plate type heat radiator. The third heat radiator includes a second upper plate and a second lower plate. The second lower plate is fixed below the second upper plate. Flow channels are formed by stamping in the second lower plate. The flow channels are respectively in communication with the first heat radiator and the second heat radiator, and the joint is arranged on the second upper plate.

In an embodiment, the heat radiator assembly further includes: a fifth heat radiator and a sixth heat radiator. The fifth heat radiator is connected between the first heat radiator and the third heat radiator, and the fifth heat radiator is separately in communication with the first heat radiator and the third heat radiator. The sixth heat radiator is connected between the second heat radiator and the third heat radiator, and the sixth heat radiator is separately in communication with the second heat radiator and the third heat radiator. The fifth heat radiator and the sixth heat radiator are both harmonica-shaped tube heat radiators.

In an embodiment, the third heat radiator is a stamping plate type heat radiator or a harmonica-shaped tube heat radiator.

The battery pack according to an embodiment of the present disclosure includes the heat radiator assembly according to the embodiment of the first aspect.

In an embodiment, the battery pack includes multiple battery cores. The battery cores have electrodes. The electrodes are corresponding to the main heat dissipation region of the heat radiator assembly.

In an embodiment, the multiple battery cores are arranged in the length direction of the first heat radiator and the second heat radiator.

The vehicle according to an embodiment of the present disclosure includes the battery pack described above.

In an embodiment, the vehicle includes an air conditioning system. The joint of the heat radiator assembly is connected to an air conditioning system pipeline in the vehicle, and the joint and the air conditioning system pipeline are connected in parallel in the air conditioning system of the vehicle.

Additional aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings.
FIG. 1 is a schematic diagram of a battery pack according to an embodiment of the present disclosure;
FIG. 2 is a schematic diagram of a heat radiator assembly according to an embodiment of the present disclosure;
FIG. 3 is a schematic diagram of a heat radiator assembly according to an embodiment of the present disclosure;
FIG. 3B is a schematic diagram of a fourth heat radiator of a heat radiator assembly according to an embodiment of the present disclosure;
FIG. 4 is an exploded view of a first heat radiator or a second heat radiator according to an embodiment of the present disclosure;
FIG. 5 is an exploded view of a third heat radiator according to an embodiment of the present disclosure;
FIG. 6 is a schematic diagram of a fourth heat radiator according to an embodiment of the present disclosure;
FIG. 7 is a schematic diagram of a fourth heat radiator and a first heat radiator according to an embodiment of the present disclosure;
FIG. 8 is a schematic diagram of a region A in FIG. 7;
FIG. 9 is a schematic diagram of a joint according to an embodiment of the present disclosure; and
FIG. 10 is a schematic diagram of a vehicle according to an embodiment of the present disclosure.

In the drawings:
1000, battery pack;
2000, vehicle; 2001, air conditioning system; 2002, air conditioning system pipeline;
100, heat radiator assembly; 200, battery core; 201, electrode;
10, first heat radiator; 11, first upper plate; 12, first lower plate; 121, fixing groove; 1211, second mating surface; 122, flow channel; 13, first main flow channel; 14, second main flow channel; 15, first branch flow channel; 151, first sub-flow channel; 152, second sub-flow channel; 16, second branch flow channel;
20, second heat radiator; 21, third main flow channel; 22, fourth main flow channel; 23, third branch flow channel; 24, fourth branch flow channel; 241, first channel; 242, second channel;
30, third heat radiator; 31, joint; 311, inlet interface; 312, outlet interface; 313, inlet; 314, outlet; 32, main heat dissipation region; 33, fifth main flow channel; 34, sixth main flow channel; 35, inlet hole; 36, outlet hole; 37, second upper plate; 38, second lower plate;
40, fourth heat radiator; 41, first mating surface; 42, first part; 43, second part; 44, third part;
50, fifth heat radiator; 60, sixth heat radiator; 70, separation portion.

### DETAILED DESCRIPTION

The embodiments of the present disclosure are described in detail below, and the embodiments described with reference to the accompanying drawings are exemplary.

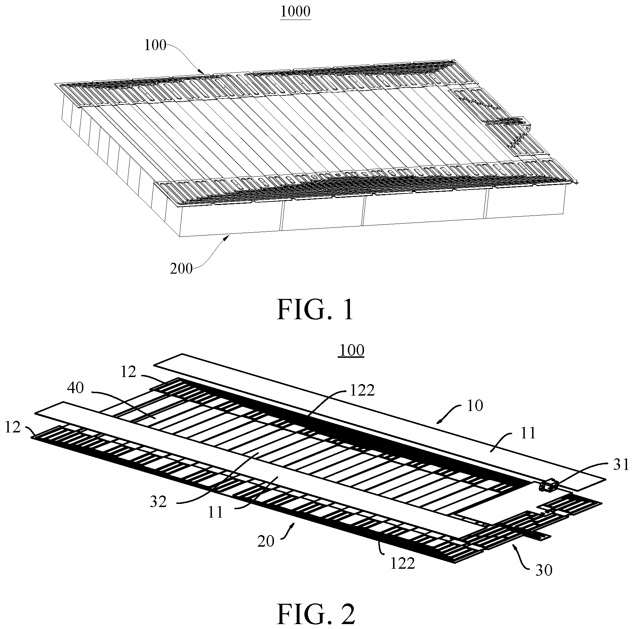

A heat radiator assembly 100 according to an embodiment of the present disclosure is described below with reference to FIG. 1 to FIG. 9. The heat radiator assembly 100 may be applied to a battery pack 1000.

With reference to FIG. 1 to FIG. 9, the heat radiator assembly 100 according to this embodiment of the present disclosure may mainly include a first heat radiator 10, a second heat radiator 20, a third heat radiator 30, and at least one fourth heat radiator 40.

The first heat radiator 10 and the second heat radiator 20 are oppositely arranged. The third heat radiator 30 is connected between an end portion of the first heat radiator 10 and an end portion of the second heat radiator 20, and the third heat radiator 30 is separately in communication with the first heat radiator 10 and the second heat radiator 20. The third heat radiator 30 is arranged with a joint 31. A main heat dissipation region 32 is formed among the third heat radiator 30, the second heat radiator 20, and the first heat radiator 10. The at least one fourth heat radiator 40 is located in the main heat dissipation region 32. The at least one fourth heat radiator 40 is connected between the first heat radiator 10 and the second heat radiator 20, and the fourth heat radiator 40 is separately in communication with the first heat radiator 10 and the second heat radiator 20. The at least one fourth heat radiator 40 and the third heat radiator 30 are arranged side by side between the first heat radiator 10 and the second heat radiator 20.

Specifically, a refrigerant may enter from the joint 31 of the third heat radiator 30 and flow to one of the first heat radiator 10 and the second heat radiator 20. Because the first heat radiator 10, the second heat radiator 20, and the third heat radiator 30 jointly define the main heat dissipation region 32, the refrigerant in one of the first heat radiator 10 and the second heat radiator 20 may enter the main heat dissipation region 32, and enter the other of the first heat radiator 10 and the second heat radiator 20 from the main heat dissipation region 32. Subsequently, the refrigerant will flow from the other of the first heat radiator 10 and the second heat radiator 20 back into the third heat radiator 30, and flow out through the joint 31 of the third heat radiator 30, thereby implementing circulation of the refrigerant in the heat radiator assembly 100. When the heat radiator assembly 100 is applied to a battery, the cooling circulation of the refrigerant on the battery can be realized.

With reference to FIG. 2 to FIG. 3, the at least one fourth heat radiator 40 is located in the main heat dissipation region 32, and the at least one fourth heat radiator 40 is connected between the first heat radiator 10 and the second heat radiator 20. Therefore, the refrigerant in one of the first heat radiator 10 and the second heat radiator 20 may flow into the fourth heat radiator 40 in the main heat dissipation region 32, and then flow into the other of the first heat radiator 10 and the second heat radiator 20 from the fourth heat radiator 40. Such a configuration can not only ensure the circular flow of the refrigerant, but also increase the flow speed of the refrigerant, thereby improving the cooling efficiency.

Further, the first heat radiator 10 and the second heat radiator 20 may be both configured as stamping plate type heat radiators, and the fourth heat radiator 40 may be configured as a harmonica-shaped tube heat radiator. Specifically, the first heat radiator 10 and the second heat radiator 20 are both configured as stamping plate type heat radiators. There are a relatively large quantity of flow channels 122 for flowing of the refrigerant inside the stamping plate type heat radiator, and the stamping plate type heat radiator has a relatively large area in contact with the outside world. Therefore, the cooling efficiency of the heat radiator assembly 100 can be improved. Adoption of the harmonica-shaped tube heat radiator can reduce the weight of the heat radiator assembly 100 and reduce the manufacturing cost of the heat radiator assembly 100 while ensuring even heat dissipation of the battery, thereby improving the energy density of the battery pack 1000. However, the present disclosure is not limited thereto.

Further, when the harmonica-shaped tube heat radiator is arranged in the main heat dissipation region 32, even if the harmonica-shaped tube heat radiator is not used to fully fill the main heat dissipation region 32, that is, there will be a part of the main heat dissipation region 32 that cannot be in contact with the outside world for heat dissipation, which may cause uneven heat dissipation of the heat radiator assembly 100, because stamping plate type heat radiators are arranged at two ends of the harmonica-shaped tube heat radiator, and the stamping plate type heat radiators can be fully in contact with the outside world, after absorbing heat, the stamping plate type heat radiators can evenly dissipate the heat to the surroundings to achieve heat dissipation. Therefore, the even heat dissipation of the heat radiator assembly 100 can be ensured under the premise of reducing the weight of the heat radiator assembly 100 and reducing the manufacturing cost of the heat radiator assembly 100.

In addition, the third heat radiator 30 may be configured as a stamping plate type heat radiator or a harmonica-shaped tube heat radiator, but is not limited thereto. The third heat radiator 30 may be configured selectively according to requirements for application of the heat radiator assembly 100 to different batteries and the cost of manufacturing the heat radiator assembly 100. Specifically, in a case that the power of the battery pack 1000 is relatively small, the battery pack 1000 generates relatively little heat, and the heat radiator assembly 100 sufficiently dissipates heat for the battery pack 1000, the third heat radiator 30 can be configured as a harmonica-shaped tube heat radiator. With such a configuration, the weight of the heat radiator assembly 100 can be reduced, making the battery pack 1000 more lightweight. When the battery pack 1000 generates relatively much heat, and the heat radiator assembly 100 needs to fully dissipate the heat of the battery pack 1000, the third heat radiator 30 may be configured as a stamping plate type heat radiator. Therefore, the applicability of the third heat radiator 30 can be improved.

Compared with configuring the heat radiator assembly as a whole stamping plate type heat radiator, the heat radiator assembly 100 of the present disclosure can reduce the weight and cost of the heat radiator assembly 100 while ensuring the heat dissipation performance. Correspondingly, compared with configuring the heat radiator assembly 100 as multiple harmonica-shaped tube heat radiators, the heat radiator assembly 100 of the present disclosure can improve the heat dissipation evenness and heat dissipation efficiency of the heat radiator assembly 100.

Therefore, by arranging the at least one fourth heat radiator 40 between the first heat radiator 10 and the second heat radiator 20, configuring both the first heat radiator 10 and the second heat radiator 20 as stamping plate type heat radiators, and configuring the fourth heat radiator 40 as a harmonica-shaped tube heat radiator, the weight of the heat radiator assembly 100 can be reduced and the performance of the heat radiator assembly 100 can be optimized while even heat dissipation of the heat radiator assembly 100 is ensured.

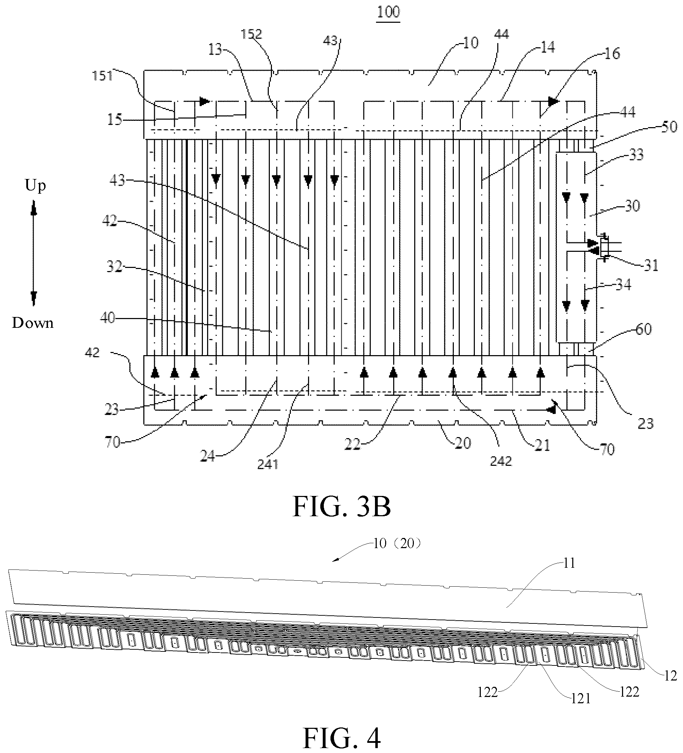

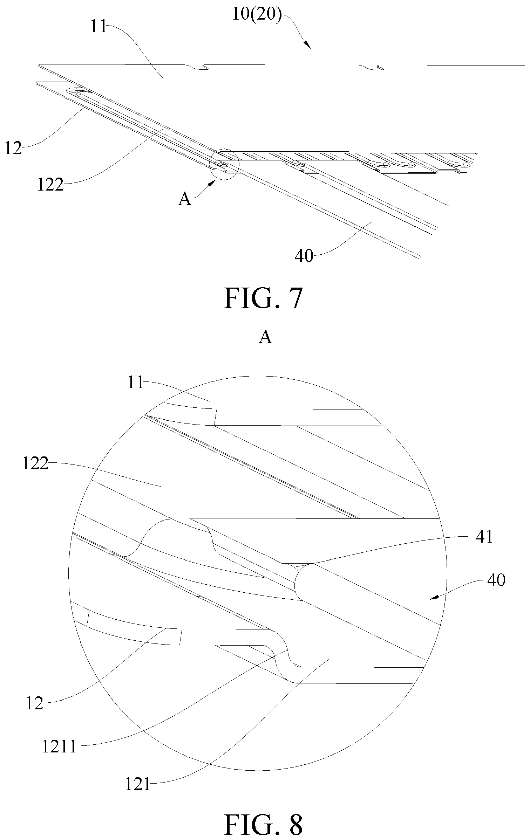

With reference to FIG. 4 and FIG. 7, at least one fixing groove 121 which is open is arranged on a side of each of the first heat radiator 10 and the second heat radiator 20 facing the fourth heat radiator 40, and an end portion of the fourth heat radiator 40 is fixed in the corresponding fixing groove 121. Such a configuration can not only reduce the difficulty of assembling the two ends of the fourth heat radiator 40 with the first heat radiator 10 and the second heat radiator 20, but also ensure the stability of the connection between the two ends of the fourth heat radiator 40 and the first heat radiator 10 and the second heat radiator 20, and prevent the fourth heat radiator 40 from moving between the first heat radiator 10 and the second heat radiator 20 to cause structural damage to the heat radiator assembly 100, thereby improving the structural reliability of the heat radiator assembly 100. In addition, the smoothness of the flow of the refrigerant between the first heat radiator 10 and the fourth heat radiator 40 and the smoothness of the mutual flow of the refrigerant between the second heat radiator 20 and the fourth heat radiator 40 can be ensured, thereby further improving the heat dissipation performance of the heat radiator assembly 100.

With reference to FIG. 4 and FIG. 7, the first heat radiator 10 and the second heat radiator 20 each mainly include a first upper plate 11 and a first lower plate 12. The first lower plate 12 is fixed below the first upper plate 11, and a flow channel 122 and the fixing groove 121 are formed by stamping in the first lower plate 12. The fixing groove 121 is in communication with the flow channel 122, and the flow channel 122 is in communication with the fourth heat radiator 40 through the fixing groove 121. Specifically, the refrigerant may flow from the third heat radiator 30 into the flow channel 122 of the first lower plate 12 of one of the first heat radiator 10 and the second heat radiator 20. Because the flow channel 122 is in communication with the fixing groove 121, the refrigerant may flow from the flow channel 122 of one of the first heat radiator 10 and the second heat radiator 20 into the fixing groove 121. Subsequently, the refrigerant flows from the fixing groove 121 into the fourth heat radiator 40, and flows from the fourth heat radiator 40 into the fixing groove 121 of the other one of the first heat radiator 10 and the second heat radiator 20. Next, the refrigerant flows from the fixing groove 121 of the other one of the first heat radiator 10 and the second heat radiator 20 into the flow channel 122. Finally, the refrigerant flows from the flow channel 122 of the other one of the first heat radiator 10 and the second heat radiator 20 back into the third heat radiator 30, and flows out from the third heat radiator 30. Such a configuration can not only make the structure of the first heat radiator 10 and the second heat radiator 20 more compact, but also ensure the smoothness and stability of the flow of the refrigerant between the first heat radiator 10 and the second heat radiator 20 and the fourth heat radiator 40.

Further, a depth of the fixing groove 121 is equal to a height of the corresponding fourth heat radiator 40, that is, the depth of the fixing groove 121 is equal to a height of the harmonica-shaped tube heat radiator. When an end portion of the harmonica-shaped tube heat radiator is arranged in the fixing groove 121, the end portion of the harmonica-shaped tube heat radiator may be flush with the surface of the first lower plate 12. Therefore, the harmonica-shaped tube heat radiator can be prevented from protruding from the first lower plate 12, and when the first upper plate 11 is arranged on the first lower plate 12, a case that only the harmonica-shaped tube heat radiator is in contact with the first upper plate 11, and the flow channel 122 on the first lower plate 12 cannot be in contact with the first upper plate 11 can be avoided. Therefore, the structure of the heat radiator assembly 100 is further optimized, and the heat dissipation efficiency of the heat radiator assembly 100 is improved.

In addition, the first upper plate 11 is arranged on the first lower plate 12, and the first upper plate 11 can be in contact with the outside world in an even and sufficient manner, then the first upper plate 11 can evenly disperse the received heat into multiple flow channels 122. The flow channels 122 can be heated more evenly, thereby improving the heat dissipation performance of the first heat radiator 10 and the second heat radiator 20.

With reference to FIG. 7 and FIG. 8, a width of the fixing groove 121 is the same as a width of the corresponding fourth heat radiator 40, and the end portion of the fourth heat radiator 40 is welded in the corresponding fixing groove 121. With such a configuration, adaptation between the fourth heat radiator 40 and the fixing groove 121 can be achieved without changing the shape of the end portion of the fourth heat radiator 40, thereby facilitating the adaptation between the fourth heat radiator 40 and the fixing groove 121.

Further, after the end portion of the fourth heat radiator 40 is placed in the fixing groove 121, the fourth heat radiator 40 and the fixing groove 121 are connected and fixed by welding. Therefore, not only the strength of the connection and fixation between the fourth heat radiator 40 and the fixing groove 121 can be improved, but also the connection between the fourth heat radiator 40 and the fixing groove 121 can be simpler and more direct.

With reference to FIG. 8, first mating surfaces 41 are arranged on two sides of the end portion of the fourth heat radiator 40, second mating surfaces 1211 are arranged on two sides of the fixing groove 121, and the first mating surfaces 41 match the second mating surfaces 1211. Specifically, the first mating surfaces 41 on the two sides of the end portion of the fourth heat radiator 40 and the second mating surfaces 1211 on the two sides of the fixing groove 121 are matched. With such a configuration, the two sides of the end portion of the fourth heat radiator 40 and the two sides of the fixing groove 121 can be closely matched, which improves the welding strength between the fourth heat radiator 40 and the fixing groove 121, thereby improving the structural reliability of the heat radiator assembly 100.

With reference to FIG. 8, each of the first mating surfaces 41 and the second mating surfaces 1211 is one of a curved surface, an arc surface, or an inclined flat surface. Specifically, two sides of an end portion of a conventional harmonica-shaped tube heat radiator are arc-shaped, and the two sides of the fixing groove 121 are curved surfaces. A gap between the harmonica-shaped tube heat radiator and the fixing groove 121 is excessively large, which may cause a welding failure, and a failure in meeting the pressure resistance and pressure burst requirements after welding. By configuring each of the first mating surfaces 41 and the second mating surfaces 1211 to be one of a curved surface, an arc surface, or an inclined flat surface, the two sides of the end portion of the fourth heat radiator 40 and the two sides of the fixing groove 121 can be attached more closely. In addition, under the premise that the first mating surface 41 and the second mating surface 1211 are closely attached to each other, each of the first mating surfaces 41 and the second mating surfaces 1211 is selectively configured to be one of a curved surface, an arc surface, or an inclined flat surface, which not only facilitates the manufacturing of the fixing groove 121 and the fourth heat radiator 40, but also can improve the applicability of the fourth heat radiator 40, the first heat radiator 10, and the second heat radiator 20.

With reference to FIG. 1 to FIG. 3, multiple fourth heat radiators 40 are arranged, and the multiple fourth heat radiators 40 are spaced apart in the main heat dissipation region 32. Such a configuration can not only improve the heat dissipation efficiency of the heat radiator assembly 100, but also make the heat dissipation of the main heat dissipation region 32 more even, thereby preventing an excessive temperature difference in the battery pack 1000, and further promoting balanced cooling of the battery pack 1000.

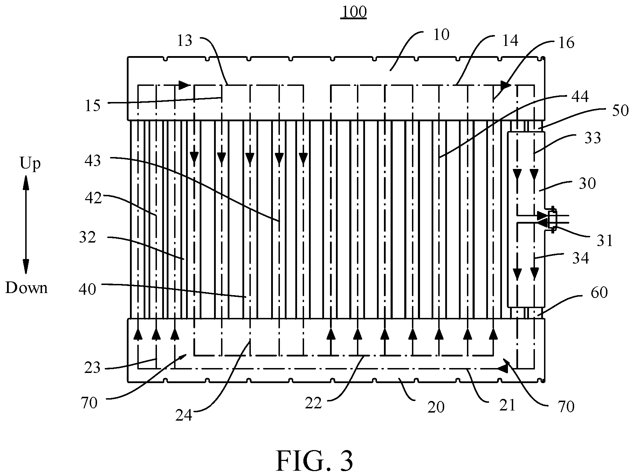

In some embodiments of the present disclosure, with reference to FIG. 3 and FIG. 3B, a first main flow channel 13 and a second main flow channel 14 are arranged in the first heat radiator 10. The first main flow channel 13 and the second main flow channel 14 are spaced apart in a length direction of the first heat radiator 10. A third main flow channel 21 and a fourth main flow channel 22 are arranged in the second heat radiator 20, and the third main flow channel 21 and the fourth main flow channel 22 are spaced apart in a width direction of the second heat radiator 20. The multiple fourth heat radiators 40 include a first part 42, a second part 43, and a third part 44. The first main flow channel 13 is in communication with the third main flow channel 21 through the first part 42 in the multiple fourth heat radiators 40, and the first main flow channel 13 is in communication with the fourth main flow channel 22 through the second part 43 in the multiple fourth heat radiators 40. The fourth main flow channel 22 is in communication with the second main flow channel 14 through the third part 44 in the multiple fourth heat radiators 40. For example, in the example of FIG. 3B, along the direction from left to right, the three fourth heat radiators 40 at the left end are the first part 42, the fourth to eighth fourth heat radiators 40 are the second part 43, and the multiple fourth heat radiators 40 from the ninth to the right end are the third part 44. It is to be noted that the foregoing quantities are only for ease of understanding, and may be specifically set according to actual conditions to better meet practical applications.

In some embodiments of the present disclosure, with reference to FIG. 3 and FIG. 3B, at least two first branch flow channels 15 are arranged in the first heat radiator 10, the at least two first branch flow channels 15 include a first sub-flow channel 151 and a second sub-flow channel 152, the first main flow channel 13 is in communication with the first part 42 in the multiple fourth heat radiators 40 through the first sub-flow channel 151, and the first main flow channel 13 is in communication with the second part 43 in the multiple fourth heat radiators 40 through the second sub-flow channel 152; and/or at least two second branch flow channels 16 are arranged in the first heat radiator 10, the third part 44 in the multiple fourth heat radiators 40 is in communication with the second main flow channel 14 through one part of the at least two second branch flow channels 16, and the second main flow channel 14 is in communication with the third heat radiator 30 through another part of the at least two second branch flow channels 16. For example, in the example of FIG. 3B, along the direction from left to right, the first to seventh second branch flow channels 16 are in communication with the third part 44, and the eighth and ninth second branch flow channels 16 are in communication with the third heat radiator 30. The second main flow channel 14 may be directly in communication with the third heat radiator 30, and the second main flow channel 14 may also be in communication with the fifth heat radiator 50 through the another part of the second branch flow channels 16. Certainly, the first main flow channel 13 may be in communication with the first part 42 and the second part 43, the first main flow channel 13 may alternatively be in communication with the first part 42 through the first sub-flow channel 151, and the first main flow channel 13 may alternatively be in communication with the second part 43 through the second sub-flow channel 152.

In some embodiments of the present disclosure, with reference to FIG. 3 and FIG. 3B, at least two fourth branch flow channels 24 are arranged in the second heat radiator 20, the at least two fourth branch flow channels 24 include a first channel 241 and a second channel 242, the second part 43 in the multiple fourth heat radiators 40 is in communication with the fourth main flow channel 22 through the first channel 241, and the fourth main flow channel 22 is in communication with the third part 44 in the multiple fourth heat radiators 40 through the second channel 242; and/or at least two third branch flow channels 23 are arranged in the second heat radiator 20, the first part 42 in the multiple fourth heat radiators 40 is in communication with the third main flow channel 21 through one part of the at least two third branch flow channels 23, and the third main flow channel 21 is in communication with the third heat radiator 30 through another part of the at least two third branch flow channels 23. In other embodiments, the third main flow channel 21 may be directly in communication with the third heat radiator 30, and the third main flow channel 21 may be directly in communication with the first part 42 of the multiple fourth heat radiators 40. For example, in the example of FIG. 3B, five third branch flow channels 23 are shown, and the three third branch flow channels 23 adjacent to the left end of the second heat radiator 20 may be the one part of the third branch flow channels 23, and the two third branch flow channels 23 adjacent to the right end of the second heat radiator 20 may be the another part of the third branch flow channels 23.

In some embodiments of the present disclosure, with reference to FIG. 3 and FIG. 3B, a fifth main flow channel 33 and a sixth main flow channel 34 are arranged in the third heat radiator 30, the fifth main flow channel 33 and the sixth main flow channel 34 are spaced apart in a length direction of the third heat radiator 30, the fifth main flow channel 33 is in communication with the second main flow channel 14, and the sixth main flow channel 34 is in communication with the third main flow channel 21.

Specifically, the refrigerant may enter the third main flow channel 21 of the second heat radiator 20 from the sixth main flow channel 34 of the third heat radiator 30 through the another part of the third branch flow channels 23. Secondly, the refrigerant enters the one part of the third branch flow channels 23 from the third main flow channel 21, and then enters the first part 42 of the fourth heat radiators 40 from the one part of the third branch flow channels 23. Subsequently, the refrigerant enters the first sub-flow channel 151 of the first heat radiator 10 from the first part 42 of the fourth heat radiators 40, and the refrigerant flows from the first sub-flow channel 151 of the first heat radiator 10 into the first main flow channel 13. Therefore, the refrigerant in the first main flow channel 13 will flow from the second sub-flow channel 152 through the second part 43 of the fourth heat radiators 40 into the first channel 241 of the second heat radiator 20, and the refrigerant enters the fourth main flow channel 22 from the first channel 241. The refrigerant in the fourth main flow channel 22 will enter the one part of the second branch flow channels 16 of the first heat radiator 10 from the second channel 242 through the third part 44. Subsequently, the refrigerant enters the second main flow channel 14 from the second branch flow channels 16, and then enters the fifth main flow channel 33 of the third heat radiator 30 from the second main flow channel 14 through the another part of the second branch flow channels 16, thereby realizing the circulation of the refrigerant in the heat radiator assembly 100. With such a configuration, under the premise of the same surface area, the refrigerant has a longer flow length in the heat radiator assembly 100, which can not only improve the heat dissipation efficiency of the heat radiator assembly 100, but also can reduce the volume of the heat radiator assembly 100, thereby facilitating the arrangement of the heat radiator assembly 100 in the battery pack 1000, and improving the density of the battery pack 1000.

Correspondingly, the refrigerant may alternatively enter the second main flow channel 14 of the first heat radiator 10 from the fifth main flow channel 33 of the third heat radiator 30, and then flow in a direction opposite to the foregoing circular flow direction. Finally, the refrigerant enters the sixth main flow channel 34 of the third heat radiator 30. The effect of the flow channel 122 is the same as the foregoing effect, and details are not described herein again.

The first main flow channel 13 and the second main flow channel 14 are flow channels for flowing only in the first heat radiator 10, and the third main flow channel 21 and the fourth main flow channel 22 are flow channels for flowing only in the second heat radiator 20. The first branch flow channel 15 is a flow channel through which the first main flow channel 13 is in communication with the outside, and the second branch flow channel 16 is a flow channel through which the second main flow channel 14 is in communication with the outside. The third branch flow channel 23 is a flow channel through which the third main flow channel 21 is in communication with the outside, and the fourth branch flow channel 24 is a flow channel through which the fourth main flow channel 22 is in communication with the outside.

In some other embodiments of the present disclosure, the refrigerant may enter one of the first heat radiator 10 and the second heat radiator 20 through the third heat radiator 30, and then enter the fourth heat radiator 40 through the one of the first heat radiator 10 and the second heat radiator 20. Subsequently, the refrigerant enters the other of the first heat radiator 10 and the second heat radiator 20 through the fourth heat radiator 40. Finally, the refrigerant enters the third heat radiator 30 from the other of the first heat radiator 10 and the second heat radiator 20. Therefore, the design of the flow channel 122 of the heat radiator assembly 100 can be simplified while ensuring the heat dissipation performance of the heat radiator.

With reference to FIG. 3, separation portions 70 are arranged on outer sides of two ends of the fourth main flow channel 22. The separation portion 70 on the outer side of one end of the fourth main flow channel 22 separates the one part of the third branch flow channels 23 from the first channel 241, and the separation portion 70 on the outer side of the other end of the fourth main flow channel 22 separates the another part of the third branch flow channels 23 from the second channel 242. For example, the separation portion 70 may be configured to have a rounded shape. Therefore, the flow of the fluid among the one part of the third branch flow channels 23, the another part of the third branch flow channels 23, the first channel 241, and the second channel 242 may not affect each other.

For example, the separation portion may be configured to have a rounded shape. Therefore, stamping is convenient, and the separation portion can guide the flow of the refrigerant, thereby further improving the smoothness and stability of the flow of the refrigerant. To a certain extent, the separation portion can also reduce the noise generated by the flow of the refrigerant.

For example, first, the refrigerant flows upward from the third main flow channel 21, passes through the first part 42 and enters the first main flow channel 13, and moves downward in the first main flow channel 13. Second, the refrigerant passes through the second part 43 and enters the fourth main flow channel 22, and then flows upward from the fourth main flow channel 22. Subsequently, the refrigerant passes through the third part 44 and enters the second main flow channel 14. A part of the refrigerant flows upward between the first heat radiator 10 and the second heat radiator 20, and another part of the refrigerant moves downward driven by pressure because the flow channels are in communication with each other.

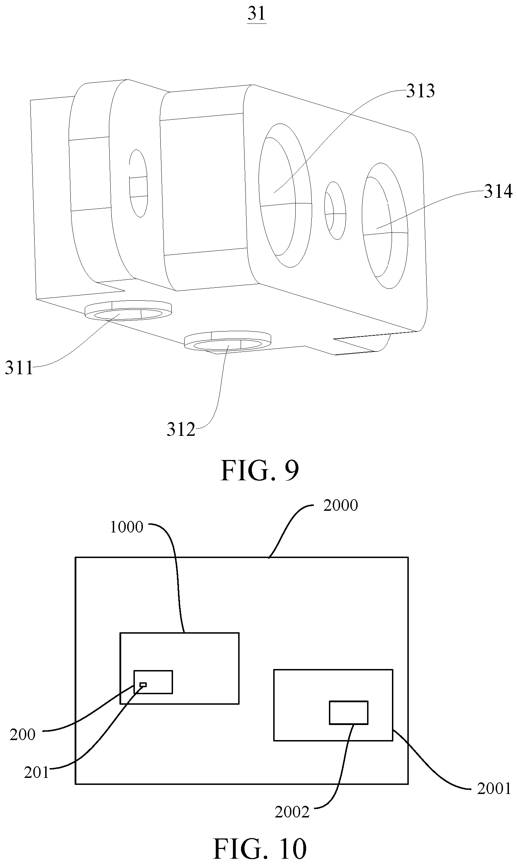

With reference to FIG. 9, the joint 31 is arranged with an inlet interface 311 and an outlet interface 312. The fifth main flow channel 33 is in communication with the outlet interface 312, and the sixth main flow channel 34 is in communication with the inlet interface 311. Specifically, by configuring the inlet interface 311 on the joint 31 to be in communication with the sixth main flow channel 34, and the outlet interface 312 on the joint 31 to be in communication with the fifth main flow channel 33, the difficulty of communicating the third heat radiator 30 with the first heat radiator 10 and the second heat radiator 20 can be reduced based on that the inlet interface 311 and the sixth main flow channel 34 are in communication with each other smoothly, and the outlet interface 312 and the fifth main flow channel 33 are in communication with each other smoothly.

With reference to FIG. 9, the joint 31 is further arranged with an inlet 313 and an outlet 314. The inlet 313 is in communication with the inlet interface 311, and the outlet 314 is in communication with the outlet interface 312. The inlet interface 311 and the outlet interface 312 are both arranged at the bottom of the joint 31, and the inlet 313 and the outlet 314 are both arranged on an outer side of the joint 31 in the length direction of the heat radiator assembly 100. Such a configuration facilitates the communication between the heat radiator assembly 100 and the outside world while ensuring that the inlet 313 is stably in communication with the inlet interface 311 and the outlet 314 is stably in communication with the outlet interface 312. For example, a pore size of the inlet 313 is larger than that of the inlet interface 311, and a pore size of the outlet 314 is larger than that of the outlet interface 312.

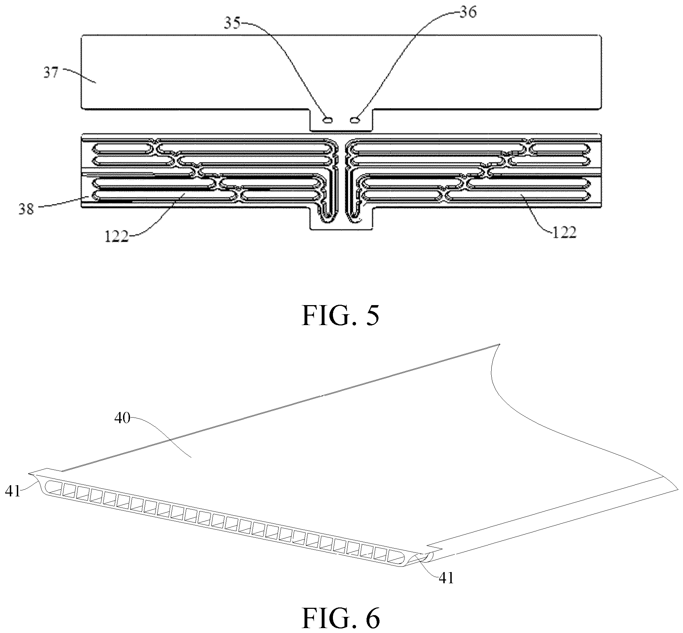

With reference to FIG. 5, the third heat radiator 30 is a stamping plate type heat radiator. The third heat radiator 30 includes a second upper plate 37 and a second lower plate 38. The second lower plate 38 is fixed below the second upper plate 37. Flow channels 122 are formed by stamping in the second lower plate 38. The joint 31 is arranged on the second upper plate 37. Specifically, by configuring the third heat radiator 30 as a stamping plate type heat radiator, the contact area between the heat radiator assembly 100 and the outside world can be further increased, thereby further improving the heat dissipation evenness of the heat radiator assembly 100.

Further, an inlet hole 35 and an outlet hole 36 are arranged on the second upper plate 37 of the third heat radiator 30, and the inlet interface 311 on the joint 31 is in communication with the inlet hole 35. Therefore, the refrigerant can enter the flow channel 122 of the third heat radiator 30 through the joint 31. The outlet interface 312 and the outlet hole 36 on the joint 31 are in communication with each other, so that the refrigerant can enter the joint 31 from the third heat radiator 30, thereby further improving the efficiency of the refrigerant circulation.

With reference to FIG. 3, the heat radiator assembly 100 further includes a fifth heat radiator 50 and a sixth heat radiator 60. The fifth heat radiator 50 is connected between the first heat radiator 10 and the third heat radiator 30, and the sixth heat radiator 60 is connected between the second heat radiator 20 and the third heat radiator 30. The fifth heat radiator 50 and the sixth heat radiator 60 may be both configured as harmonica-shaped tube heat radiators. With such a configuration, when the lengths are the same, the weight of the harmonica-shaped tube heat radiator is less than that of the stamping plate type heat radiator. Therefore, compared with directly arranging stamping plate type heat radiators between the third heat radiator 30 and the first heat radiator 10, and between the third heat radiator 30 and the second heat radiator 20, configuring the fifth heat radiator 50 and the sixth heat radiator 60 as harmonica-shaped tube heat radiators can further reduce the weight of the heat radiator assembly 100 while ensuring the heat dissipation efficiency of the heat radiator assembly 100.

Optionally, a flow channel 122 and a fixing groove 121 are formed by stamping in the fifth heat radiator 50, and the fixing groove 121 is in communication with the flow channel 122. The fifth heat radiator 50 may be in communication with the first heat radiator 10 through the corresponding flow channel 122. Specifically, the refrigerant may flow from the first heat radiator 10 into the flow channel 122 of the fifth heat radiator 50, and because the flow channel 122 is in communication with the fixing groove 121, the refrigerant may flow from the flow channel 122 in the first heat radiator 10 into the fixing groove 121. Subsequently, the refrigerant flows from the fixing groove 121 into the fifth heat radiator 50, and flows into the fixing groove 121 corresponding to the fifth heat radiator 50. Next, the refrigerant flows from the fixing groove 121 of the fifth heat radiator 50 into the flow channel 122 corresponding to the fifth heat radiator 50. Therefore, the smoothness and stability of the flow of the refrigerant between the first heat radiator 10 and the fifth heat radiator 50 can be ensured. Certainly, the refrigerant may alternatively flow in the reverse direction according to the foregoing path.

In addition, a flow channel 122 and a fixing groove 121 are formed by stamping in the sixth heat radiator 60, and the fixing groove 121 is in communication with the flow channel 122. The sixth heat radiator 60 may be in communication with the second heat radiator 20 through the corresponding flow channel 122. Specifically, the refrigerant may flow from the sixth heat radiator 60 into the flow channel 122 of the second heat radiator 20. Because the flow channel 122 is in communication with the fixing groove 121, the refrigerant may flow from the flow channel 122 in the sixth heat radiator 60 into the fixing groove 121. Subsequently, the refrigerant flows from the fixing groove 121 into the second heat radiator 20, and flows into the corresponding fixing groove 121 of the second heat radiator 20. Next, the refrigerant flows from the fixing groove 121 of the second heat radiator 20 into the corresponding flow channel 122 of the second heat radiator 20. Therefore, the smoothness and stability of the flow of the refrigerant between the sixth heat radiator 60 and the second heat radiator 20 can be ensured. For example, the structures of the fifth heat radiator 50 and the sixth heat radiator 60 may be approximately the same as the structure of the first heat radiator 10 or the second heat radiator 20.

With reference to FIG. 1, the battery pack 1000 according to an embodiment of the present disclosure may mainly include multiple battery cores 200, the battery cores 200 having electrodes 201; and the heat radiator assembly 100 described above. The main heat dissipation region 32 of the heat radiator assembly 100 are corresponding to the electrodes 201. Specifically, the electrodes 201 of the multiple battery cores 200 are corresponding to the main heat dissipation region 32, and the main heat dissipation region 32 can dissipate heat for the electrodes 201 of the multiple battery cores 200, thereby improving the heat dissipation performance and reliability of the battery pack 1000. In addition, because the heat dissipation performance of the battery pack 1000 is improved, the power limitation of the heat dissipation of the battery pack 1000 will also be reduced, thereby improving the performance of the battery pack 1000.

With reference to FIG. 1, the multiple battery cores 200 are arranged in the length direction of the first heat radiator 10 and the second heat radiator 20. Such a configuration can not only facilitate the arrangement of the heat radiator assembly 100 in the battery pack 1000, but also can make full use of the space of the battery pack 1000, so that the heat radiator assembly 100 can dissipate heat more evenly for the multiple battery cores 200.

Further, a positive electrode 2011 of the battery core 200 and a negative electrode 2012 of the battery core 200 are respectively arranged at two ends of the battery core 200 in the length direction. The heat generation at the positive electrode 2011 of the battery core 200 and the negative electrode 2012 of the battery core 200 is the largest. Therefore, by arranging the multiple fourth heat radiators 40 between the first heat radiator 10 and the second heat radiator 20 in the length direction, and making the multiple fourth heat radiators 40 correspond to the positive electrodes 2011 of the multiple battery cores 200 and the negative electrodes 2012 of the multiple battery cores 200, that is, ensuring that a fourth heat radiator 40 is arranged at the positive electrode 2011 and the negative electrode 2012 of each battery core 200 as much as possible, to dissipate the heat of the positive electrodes 2011 and the negative electrodes 2012 of the multiple battery cores 200, the weight of the heat radiator assembly 100 can be reduced when the heat dissipation performance of the heat radiator assembly 100 for the battery cores 200 can be further ensured, thereby optimizing the structural design of the heat radiator assembly 100.

With reference to FIG. 10, a vehicle 2000 according to an embodiment of the present disclosure includes the foregoing battery pack 1000.

As the only inlet and outlet of the refrigerant in the heat radiator assembly 100, the joint 31 of the heat radiator assembly 100 may be connected to an air conditioning system pipeline 2002 in the vehicle 2000, and the joint 31 and the air conditioning system pipeline 2002 are connected in parallel in the air conditioning system 2001 of the vehicle 2000. The heat radiator assembly 100 may be used as an evaporator or condenser in the battery pack 1000. An air conditioning controller of the vehicle 2000 controls whether the refrigerant flows in the heat radiator assembly 100, and controls the evaporation (condensation) of the refrigerant in the heat radiator assembly 100 according to the requirements of the battery pack 1000, to achieve cooling (heating) of the battery pack 1000. The heat radiator assembly 100 may be connected in parallel with other evaporators or condensers in the air conditioning system 2001 for use, or the heat radiator assembly 100 may be used alone as an evaporator or condenser in the air conditioning system 2001.

When the heat radiator assembly 100 is used as an evaporator, a liquid refrigerant evaporates in the heat radiator assembly 100 to cool the battery pack 1000. When the heat radiator assembly 100 is used as a condenser, a gaseous refrigerant condenses in the heat radiator assembly 100 to heat the battery pack 1000. Because a refrigerant flows inside the heat radiator assembly 100, compared with a heat exchanger with a single-phase liquid flowing inside, the heat radiator assembly 100 has higher heat dissipation efficiency and a higher energy efficiency ratio.

Further, the heat radiator assembly 100 of the vehicle 2000 transfers heat through a phase change of the refrigerant (gas to liquid, or liquid to gas). The heat transfer efficiency of the refrigerant is higher than that of a conventional single-phase liquid working fluid, which is more conducive to cooling and heating the battery pack 1000, thereby improving the energy efficiency ratio of the air conditioning system 2001 on the vehicle 2000 and reducing the energy consumption of the air conditioning system 2001.

In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation on the present disclosure.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, schematic descriptions of the foregoing terms do not necessarily refer to the same embodiment or example.

Although the embodiments of the present disclosure have been shown and described, a person of ordinary skill in the art should understand that various changes, modifications, replacements, and variations may be made to the embodiments without departing from the principles and spirit of the present disclosure, and the scope of the present disclosure is as defined by the appended claims and their equivalents.

## Claims

1. A heat radiator assembly (100), comprising:
a first heat radiator (10);
a second heat radiator (20), the second heat radiator (20) and the first heat radiator (10) being oppositely arranged;
a third heat radiator (30), the third heat radiator (30) being connected between the first heat radiator (10) and the second heat radiator (20), the third heat radiator (30) being separately in communication with the first heat radiator (10) and the second heat radiator (20), the third heat radiator (30) being provided with a joint (31), and a main heat dissipation region (32) being formed among the third heat radiator (30), the second heat radiator (20), and the first heat radiator (10); and
at least one fourth heat radiator (40), the at least one fourth heat radiator (40) being located in the main heat dissipation region (32), the at least one fourth heat radiator (40) being connected between the first heat radiator (10) and the second heat radiator (20), the fourth heat radiator (40) being separately in communication with the first heat radiator (10) and the second heat radiator (20), the at least one fourth heat radiator (40) and the third heat radiator (30) being arranged side by side between the first heat radiator (10) and the second heat radiator (20), the first heat radiator (10) and the second heat radiator (20) being both stamping plate type heat radiators, and the fourth heat radiator (40) being a harmonica-shaped tube heat radiator.

2. The heat radiator assembly (100) according to claim 1, wherein at least one fixing groove (121) which is open is arranged on a side of each of the first heat radiator (10) and the second heat radiator (20) facing the fourth heat radiator (40), and an end portion of the fourth heat radiator (40) is fixed in the corresponding fixing groove (121).

3. The heat radiator assembly (100) according to claim 2, wherein the first heat radiator (10) and the second heat radiator (20) each comprise a first upper plate (11) and a first lower plate (12), the first lower plate (12) is fixed below the first upper plate (11), a flow channel (122) and the fixing groove (121) are formed by stamping in the first lower plate (12), the fixing groove (121) is in communication with the flow channel (122), and the flow channel (122) is in communication with the fourth heat radiator (40) through the fixing groove (121).

4. The heat radiator assembly (100) according to claim 2 or 3, wherein a width of the fixing groove (121) is the same as a width of the corresponding fourth heat radiator (40), and the end portion of the fourth heat radiator (40) is welded in the corresponding fixing groove (121).

5. The heat radiator assembly (100) according to any one of claims 2 to 4, wherein a depth of the fixing groove (121) is equal to a height of the corresponding fourth heat radiator (40).

6. The heat radiator assembly (100) according to any one of claims 2 to 5, wherein first mating surfaces (41) are arranged on two sides of the end portion of the fourth heat radiator (40), second mating surfaces (1211) are arranged on two sides of the fixing groove (121) corresponding to the fourth heat radiator (40), and the first mating surfaces (41) match the second mating surfaces (1211).

7. The heat radiator assembly (100) according to claim 6, wherein each of the first mating surfaces (41) and the second mating surfaces (1211) is one of a curved surface, an arc surface, or an inclined flat surface.

8. The heat radiator assembly (100) according to any one of claims 1 to 7, wherein a plurality of fourth heat radiators (40) are provided, and the plurality of fourth heat radiators (40) are spaced apart in the main heat dissipation region (32).

9. The heat radiator assembly (100) according to claim 8, wherein a first main flow channel (13) and a second main flow channel (14) are arranged in the first heat radiator (10), and the first main flow channel (13) and the second main flow channel (14) are spaced apart in a length direction of the first heat radiator (10);
a third main flow channel (21) and a fourth main flow channel (22) are arranged in the second heat radiator (20), and the third main flow channel (21) and the fourth main flow channel (22) are spaced apart in a width direction of the second heat radiator (20); and
the plurality of fourth heat radiators (40) comprise a first part (42), a second part (43), and a third part (44), the first main flow channel (13) is in communication with the third main flow channel (21) through the first part (42) of the plurality of fourth heat radiators (40), the first main flow channel (13) is in communication with the fourth main flow channel (22) through the second part (43) of the plurality of fourth heat radiators (40), and the fourth main flow channel (22) is in communication with the second main flow channel (14) through the third part (44) of the plurality of fourth heat radiators (40).

10. The heat radiator assembly (100) according to claim 9, wherein at least two first branch flow channels (15) are arranged in the first heat radiator (10), the at least two first branch flow channels (15) comprise a first sub-flow channel (151) and a second sub-flow channel (152), the first main flow channel (13) is in communication with the first part (42) of the plurality of fourth heat radiators (40) through the first sub-flow channel (151), and the first main flow channel (13) is in communication with the second part (43) of the plurality of fourth heat radiators (40) through the second sub-flow channel (152); and/or
at least two second branch flow channels (16) are arranged in the first heat radiator (10), the third part (44) of the plurality of fourth heat radiators (40) is in communication with the second main flow channel (14) through one part of the at least two second branch flow channels (16), and the second main flow channel (14) is in communication with the third heat radiator (30) through another part of the at least two second branch flow channels (16).

11. The heat radiator assembly (100) according to claim 9 or 10, wherein at least two fourth branch flow channels (24) are arranged in the second heat radiator (20), the at least two fourth branch flow channels (24) comprise a first channel (241) and a second channel (242), the second part (43) of the plurality of fourth heat radiators (40) is in communication with the fourth main flow channel (22) through the first channel (241), and the fourth main flow channel (22) is in communication with the third part (44) of the plurality of fourth heat radiators (40) through the second channel (242); and/or
at least two third branch flow channels (23) are arranged in the second heat radiator (20), the first part (42) of the plurality of fourth heat radiators (40) is in communication with the third main flow channel (21) through one part of the at least two third branch flow channels (23), and the third main flow channel (21) is in communication with the third heat radiator (30) through another part of the at least two third branch flow channels (23).

12. The heat radiator assembly (100) according to any one of claims 9 to 11, wherein a fifth main flow channel (33) and a sixth main flow channel (34) are arranged in the third heat radiator (30), the fifth main flow channel (33) and the sixth main flow channel (34) are spaced apart in a length direction of the third heat radiator (30), the fifth main flow channel (33) is in communication with the second main flow channel (14), and the sixth main flow channel (34) is in communication with the third main flow channel (21).

13. The heat radiator assembly (100) according to any one of claims 9 to 12, wherein separation portions (70) are arranged on outer sides of two ends of the fourth main flow channel (22), the separation portion (70) on the outer side of one end of the fourth main flow channel (22) separates the one part of the third branch flow channels (23) from the first channel (241), and the separation portion (70) on the outer side of the other end of the fourth main flow channel (22) separates the another part of the third branch flow channels (23) from the second channel (242).

14. The heat radiator assembly (100) according to any one of claims 9 to 13, wherein the joint (31) is arranged with an inlet interface (311) and an outlet interface (312), the fifth main flow channel (33) is in communication with the outlet interface (312), and the sixth main flow channel (34) is in communication with the inlet interface (311).

15. The heat radiator assembly (100) according to any one of claims 1 to 14, wherein the third heat radiator (30) comprises a second upper plate (37) and a second lower plate (38), the second lower plate (38) is fixed below the second upper plate (37), flow channels (122) are formed by stamping in the second lower plate (38), the flow channels (122) are respectively in communication with the first heat radiator (10) and the second heat radiator (20), and the joint (31) is arranged on the second upper plate (37).

16. The heat radiator assembly (100) according to any one of claims 13 to 15, further comprising a fifth heat radiator (50) and a sixth heat radiator (60), the fifth heat radiator (50) being connected between the first heat radiator (10) and the third heat radiator (30), the fifth heat radiator (50) being separately in communication with the first heat radiator (10) and the third heat radiator (30), the sixth heat radiator (60) being connected between the second heat radiator (20) and the third heat radiator (30), the sixth heat radiator (60) being separately in communication with the second heat radiator (20) and the third heat radiator (30), and the fifth heat radiator (50) and the sixth heat radiator (60) being both harmonica-shaped tube heat radiators.

17. The heat radiator assembly (100) according to any one of claims 1 to 16, wherein the third heat radiator (30) is a stamping plate type heat radiator or a harmonica-shaped tube heat radiator.

18. A battery pack (1000), comprising the heat radiator assembly (100) according to any one of claims 1 to 17.

19. The battery pack (1000) according to claim 18, comprising:
a plurality of battery cores (200), the battery cores (200) having electrodes (201), the electrodes (201) being corresponding to the main heat dissipation region (32) of the heat radiator assembly (100).

20. The battery pack (1000) according to claim 18 or 19, wherein the plurality of battery cores (200) are arranged in the length direction of the first heat radiator (10) and the second heat radiator (20).

21. A vehicle (2000), comprising the battery pack (1000) according to any one of claims 18 to 20.

22. The vehicle (2000) according to claim 21, comprising an air conditioning system (2001), the joint (31) of the heat radiator assembly (100) being connected to an air conditioning system pipeline (2002) in the vehicle (2000), and the joint (31) and the air conditioning system pipeline (2002) being connected in parallel in the air conditioning system (2001) of the vehicle (2000).
